# EUROPÄISCHE PATENTSCHRIFT

(11) **EP 2 330 400 B1**
(45) Veröffentlichungstag und Bekanntmachung des Hinweises auf die Patenterteilung: **20.02.2013**
(21) Anmeldenummer: 10015119.0
(22) Anmeldetag: 30.11.2010
(51) Int. Cl.: G01N 1/20, G01N 15/14, G01N 15/02, G01N 21/85, B65D 88/66

(54) **Partikelmessgerät, insbesondere zur Analyse von Korngrössen feiner und feinster Schüttgüter**
Particle measuring device, in particular for analysing the particle sizes of fine and extremely fine bulk goods
Appareil de mesure de particules, notamment pour l'analyse de grandeurs de grains de matériaux en vrac fins et très fins

(30) Priorität: 02.12.2009 DE 102009056503
(43) Veröffentlichungstag der Anmeldung: 08.06.2011
(73) Patentinhaber: Haver & Boecker OHG, 59302 Oelde (DE)
(72) Erfinder: Vennewald, Sven, 59302 Oelde (DE)
(74) Vertreter: Schütte, Hartmut

(56) Entgegenhaltungen:
- EP-A2- 0 518 188
- WO-A1-02/44692
- WO-A1-2008/143672
- WO-A2-2004/002395
- DE-A1- 19 733 317
- US-A- 5 011 285
- US-A1- 2003 147 074

## Beschreibung

### Beschreibung

Die Erfindung betrifft ein Partikelmessgerät zur Analyse von Partikeln und insbesondere zur Analyse von Korngrößen von feinen und feinsten Schüttgütern.

Beispielsweise bei der Herstellung von Zucker, Kaffee aber auch im Bereich der pharmazeutischen Industrie oder bei der Herstellung sonstiger Schüttgüter ist die Korngrößenverteilung der Partikel ein wichtiger Parameter bei der Produktion und bei der Verwendung der hergestellten Produkte. Beispielsweise hängt die Auflösungsgeschwindigkeit von Zuckerpartikeln in Flüssigkeiten von der Korngröße ab. Deshalb kontrollieren die Hersteller solcher Schüttgüter die Korngrößenverteilung kontinuierlich oder in regelmäßigen Abständen. Dazu werden beispielsweise Analyseproben der Produktion entnommen und mittels spezieller Partikelanalysegeräte auf ihre Korngrößenverteilung analysiert.

Im Stand der Technik sind dazu u.a. Siebsysteme bekannt geworden, bei denen mehrere hintereinander geschaltete Siebe mit unterschiedlichen Maschenweiten eingesetzt werden, um eine definierte Korngrößenverteilung der zu untersuchenden Proben zu erhalten. Dazu wird jeweils bestimmt, welcher Gewichtsanteil der Probe auf welchem Sieb noch vorhanden ist.

Außerdem sind computerunterstützte Analysemethoden bekannt geworden, bei denen die zu untersuchenden Schüttgüter vereinzelt und durch den Strahlengang einer optischen Analyseeinrichtung geschickt werden. Während des freien Falls durch den Strahlengang werden Bilder aufgenommen und anhand der Schattenbildung auf dem Sensor wird die jeweilige Partikelgröße detektiert und deren statistische Verteilung ermittelt. Besonders wichtig für die Genauigkeit der Messung ist dabei, dass Agglomerate von Partikeln möglichst vermieden werden, da aneinander anhängende Partikel im optischen Strahlengang als ein gemeinsames Partikel erscheinen und somit eine zu große Korngröße oder zu große Längenabmessungen bestimmt werden, die bei einer vollständigen Vereinzelung der Partikel nicht gemessen werden würden.

Aus der WO 02/44692 A1 ist ein Partikelmessgerät bekannt, bei dem zwei aufeinanderfolgende Vibrationsrinnen die Partikel vereinzeln. In der US 2003/0147074 A1 werden Partikel vor der Messung durch eine Bürste separiert. Aus der WO 2004/002395 A2 ist es bekannt, Schwingungen unterschiedlicher Frequenzen zur Vermeidung von Anbackungen und Verklumpungen von pharmazeutischen Pulvern an Dosiertrichtern zu nutzen. Ein nichtlineares Schwingungssignal wird dabei von einem Signalgeber generiert und an einen einzigen Schwingungsgenerator weitergegeben.

Aufgrund von Adhäsionskräften und Kohäsionskräften und in Abhängigkeit von dem zu untersuchenden Produkt neigen die Partikel mehr oder weniger dazu, aneinander anzuhaften oder auch an der Dosiereinrichtung festzubacken. Bleibt ein Teil der Probe jedoch in der Dosiereinrichtung, wird insgesamt ein nicht korrektes Ergebnis ermittelt, da sich die detektierte Korngrößenverteilung nur auf die vermessenen Partikel bezieht. Ein weiterer Nachteil von Anbackungen in der Dosiereinrichtung ist, dass bei nachfolgenden Messungen sich die Anbackungen lösen können, wodurch eine Verfälschung der nachfolgenden Messergebnisse erfolgt. Eine Lösung dafür ist, die Dosiereinrichtung zu säubern, was aber einen erheblichen zusätzlichen Aufwand darstellt, der die Wirtschaftlichkeit entsprechend senkt.

Es ist deshalb vor dem Hintergrund des beschriebenen Standes der Technik die Aufgabe der vorliegenden Erfindung, ein Partikelmessgerät zur Verfügung zu stellen, welches eine erhöhte Genauigkeit durch eine verbesserte Vereinzelung der Partikel ermöglicht. Vorzugsweise sollen auch Anbackungen an der Dosiereinrichtung besser vermieden oder gelöst werden.

Diese Aufgabe wird gelöst durch das erfindungsgemäße Partikelmessgerät mit den Merkmalen des Anspruchs 1. Das erfindungsgemäße Verfahren ist Gegenstand des Anspruchs 11.

Bevorzugte Weiterbildungen der Erfindung sind in den Unteransprüchen angegeben. Weitere Vorteile und Merkmale der Erfindung ergeben sich aus dem Ausführungsbeispiel.

Das erfindungsgemäße Partikelmessgerät zur Analyse von Partikeln ist insbesondere zur Ermittlung der Korngrößenverteilung der Partikel von Schüttgütern vorgesehen und umfasst wenigstens eine Dosiereinrichtung. Die Dosiereinrichtung ist wenigstens teilweise mittels eines Schwingungsgenerators in Schwingung versetzbar, um in der Dosiereinrichtung vorhandene Partikel zu wenigstens einem Ausgang der Dosiereinrichtung zu transportieren und dabei zu vereinzeln. Neben dem ersten Schwingungsgenerator ist wenigstens ein zweiter, davon unterschiedlicher, Schwingungsgenerator vorgesehen, der zu weiteren Vereinzelung der in der Dosiereinrichtung vorhandenen Partikel dient. Der zweite Schwingungsgenerator ist dazu geeignet und/oder dazu vorgesehen, höherfrequentere Schwingungen als der erste Schwingungsgenerator zu erzeugen.

Das erfindungsgemäße Partikelmessgerät hat viele Vorteile. Ein erheblicher Vorteil des erfindungsgemäßen Partikelmessgerätes liegt darin, dass neben einem Schwingungsgenerator zum Transport der Partikel innerhalb der Dosiereinrichtung ein weiterer Schwingungsgenerator eingesetzt wird, der als Vereinzelungseinrichtung dient. Dadurch, dass zwei unterschiedliche Schwingungsgeneratoren eingesetzt werden, kann eine deutlich bessere Vereinzelung erzielt werden, wodurch sich erheblich genauere Analyseergebnisse ermitteln lassen. Außerdem steigt die Reproduzierbarkeit erheblich.

Vorzugsweise umfasst das Partikelmessgerät wenigstens eine Analyseeinrichtung mit insbesondere wenigstens einer optischen Sensoreinrichtung. Die optische Sensoreinrichtung umfasst vorzugsweise wenigstens eine Kamerazeile oder einer Sensorzeile, die eine Vielzahl an Sensorelementen umfasst. Vorzugsweise wird mit hoher Frequenz das Signal der Sensor- bzw. der Kamerazeile erfasst. Besonders bevorzugt liegt die Abtastfrequenz der Sensorzeile in einem Bereich größer 1000 Hz. In besonders bevorzugten Weiterbildungen wird die Sensorzeile mehr als 10.000 mal und insbesondere mehr als 20.000 mal/Sekunde abgefragt. In konkreten Ausgestaltungen liegt die Abtastfrequenz bei etwa 40 oder 60 MHz, woraus bei einer Anzahl von Sensorelementen von z. B. 2048 oder 4096 eine Abtastfrequenz pro Sensorelement zwischen etwa 9 und 30 kHz resultiert. Mit einer solch hohen Abtastfrequenz kann aus einem an sich eindimensionalen Sensorsignal ein zweidimensionales Signal ermittelt werden, da innerhalb des zeitlichen Abstandes von einem ersten ermittelten Signal bis zu dem zweiten abgefragten Signal sich die Lage der Partikel bei freiem Fall durch die optische Messstrecke nur gering verändert hat, sodass eine genaue Form- und Größenbestimmung der einzelnen Partikel möglich ist.

Es ist jedoch auch möglich, flächenförmige Sensoren einzusetzen, bei denen direkt ein vollständiges Bild der einzelnen Partikel aufgenommen wird.

Insbesondere sind verschiedene Partikelparameter, wie z. B. Partikelgröße und Partikelform bestimmbar. Möglich ist gegebenenfalls auch die Bestimmung der Partikelart.

Es ist vorteilhaft, dass der zweite Schwingungsgenerator dazu geeignet ist, höherfrequentere Schwingungen als der erste Schwingungsgenerator zu erzeugen. Der erste Schwingungsgenerator kann im Wesentlichen zum Transport der Partikel zum Ausgang der Dosiereinrichtung dienen, während der zweite Schwingungsgenerator aufgrund der höheren Schwingungsfrequenz mehr zur Vereinzelung der Partikel beitragen kann.

Insbesondere ist der erste Schwingungsgenerator dazu geeignet und bestimmt, Schwingungen im Bereich zwischen 10 Hz und 1.000 Hz, insbesondere zwischen 10 Hz und 500 Hz zu erzeugen. Dabei kann die Schwingungsfrequenz des ersten Schwingungsgenerators aus der Frequenz des Wechselstromnetzes abgeleitet werden. Beispielsweise kann die zentrale Schwingungsfrequenz des ersten Schwingungsgenerators der Frequenz des Wechselstromnetzes entsprechen oder einem (kleinen) ganzzahligen Vielfachen der Frequenz des Wechselstromnetzes entsprechen.

Der zweite Schwingungsgenerator weist vorzugsweise wenigstens die doppelte und insbesondere wenigstens die zehnfache zentrale Schwingungsfrequenz auf, die der erste Schwingungsgenerator aufweist. Die zentrale Schwingungsfrequenz des zweiten Schwingungsgenerators liegt insbesondere im Bereich größer 1.000 Hz und vorzugsweise im Bereich größer 5.000 Hz und besonders bevorzugt im Bereich größer 10.000 Hz. In einer konkreten und vorteilhaften Ausgestaltung ist der zweite Schwingungsgenerator als Ultraschallgenerator ausgeführt, der insbesondere eine Frequenz zwischen 30 und 40 kHz und vorzugsweise zwischen 33 und 37 kHz erzeugt.

Der zweite Schwingungsgenerator kann dazu geeignet und bestimmt sein, eine insbesondere zeitlich variable Schwingungsfrequenz zu erzeugen. Die Schwingungsfrequenz des zweiten Schwingungsgenerators kann insbesondere periodisch innerhalb vorgegebener und vorzugsweise einstellbarer Frequenzen veränderbar sein. Durch eine sich verändernde Schwingungsfrequenz des zweiten Schwingungsgenerators zur Vereinzelung der Partikel werden Partikelagglomerate und Anbackungen an der Dosiereinrichtung mit unterschiedlichen Frequenzen angeregt, sodass eine noch bessere Trennung der Partikel voneinander und ein besseres Lösen von der Dosiereinrichtung ermöglicht wird.

Grundsätzlich wird schon durch die zwei Schwingungsgeneratoren die Bildung von Hotspots vermieden. Solche Knotenpunkte der Schwingung, wo sich Partikel dauerhaft ablagern, werden aber durch eine Frequenzvariation der Schwingungsfrequenz des zweiten und/oder ersten Schwingungsgenerators noch erheblich stärker verhindert, sodass eine vollständige Entleerung der Dosiereinrichtung in der Regel gewährleistet wird.

Vorzugsweise weist die Dosiereinrichtung eine an einem Ende geschlossene und etwa U-förmige Dosierrinne auf, wobei an dem offenen Ende der Dosierrinne der Ausgang der Dosierrinne vorgesehen ist.

Die Dosiereinrichtung und insbesondere die Dosierrinne können unter einem einstellbaren Winkel zur Horizontalen ausgerichtet sein. Der Ausgang der Dosierrinne kann dabei höher oder auch tiefer als das geschlossene Ende der Dosierrinne angeordnet sein. Je nach eingestelltem Winkel kann gegebenenfalls auch auf einen ersten Schwingungsgenerator zum Transport der Partikel verzichtet werden.

Vorzugsweise ist wenigstens eine Lichtquelle vorgesehen, welche Licht auf die Sensoreinrichtung abstrahlt, welche beispielsweise auch als CCD-Zeile bzw. CCD-Kamera ausgeführt ist. Der Strahlengang zwischen der Lichtquelle und der Sensoreinrichtung ist dabei so angeordnet, dass von dem Ausgang der Dosiereinrichtung herabfallende Partikel den Strahlengang durchqueren. Aufgrund der hohen Abtastfrequenz der Sensoreinrichtung kann sichergestellt werden, dass jedes Partikel zuverlässig detektiert wird.

In allen Ausgestaltungen ist vorzugsweise eine Datenverarbeitungseinrichtung vorgesehen, mit welcher die von der Sensoreinrichtung erfassten Signale aufnehmbar und auswertbar sind. Dazu kann die Datenverarbeitungseinrichtung einen flüchtigen und insbesondere auch einen nicht-flüchtigen Speicher aufweisen, um die aufgenommenen Signale abzulegen.

In bevorzugten Ausgestaltungen kann eine Temperiereinrichtung vorgesehen sein, um die Dosiereinrichtung zu temperieren und beispielsweise zu heizen, um bei feuchtigkeitsempfindlichen Produkten die Vereinzelung der Partikel weiter zu unterstützen.

Ein weiteres Partikelmessgerät, das keine Ausführungsform der Erfindung darstellt, sondern ein Beispiel, welches das Verständnis der Erfindung erleichtert, dient ebenfalls zur Analyse von Partikeln und insbesondere von Schüttgütern und umfasst eine Dosiereinrichtung, wobei die Dosiereinrichtung wenigstens teilweise mittels eines Schwingungsgenerators in Schwingung versetzt wird, um in der Dosiereinrichtung vorhandene Partikel zu wenigstens einem Ausgang der Dosiereinrichtung zu transportieren und damit zu vereinzeln. Dabei beträgt die Schwingungsfrequenz bzw. eine zentrale Schwingungsfrequenz des Schwingungsgenerators mehr als 500 Hz und insbesondere mehr als 1 kHz. Vorzugsweise ist die zentrale Schwingungsfrequenz des Schwingungsgenerators größer als 5 kHz und kann besonders bevorzugt auch im Ultraschallbereich liegen.

Ein solches Partikelmessgerät weist den erheblichen Vorteil auf, dass durch die hohe Schwingungsfrequenz des Schwingungsgenerators gleichzeitig eine zuverlässige Vereinzelung der Partikel und ein zuverlässiger Transport der Partikel bewirkt werden. Insbesondere bei einer geeigneten Neigung der Dosiereinrichtung zur Horizontalen kann ein zuverlässiges und reproduzierbares Messergebnis erzielt werden. Gegebenenfalls kann die Neigung der Dosiereinrichtung zur Horizontalen während der Messung einstellbar sein, um beispielsweise durch eine veränderte Steigung der Dosiereinrichtung zum Ausgang der Dosiereinrichtung hin, die Fördergeschwindigkeit zu variieren.

Das erfindungsgemäße Verfahren zur Analyse von Partikeln wird unter Verwendung wenigstens einer Dosiereinrichtung zur Aufnahme einer zu analysierenden Probe durchgeführt. Dabei werden die Partikel in der Dosiereinrichtung mittels eines Schwingungsgenerators vereinzelt und zu wenigstens einem Ausgang der Dosiereinrichtung transportiert. Die Dosiereinrichtung zur Vereinzelung und zum Transport der Partikel wird dabei mittels eines ersten Schwingungsgenerators und mittels eines davon unterschiedlichen zweiten Schwingungsgenerators in Schwingung versetzt, wobei mit dem zweiten Schwingungsgenerator eine höherfrequente Schwingung als mit dem ersten Schwingungsgenerator erzeugt wird bzw. erzeugbar ist. Das erfindungsgemäße Verfahren ermöglicht eine zuverlässige und reproduzierbare hochgenaue Vermessung der Korngrößenverteilung von Partikeln an insbesondere feinen und feinsten Schüttgütern.

Der zweite Schwingungsgenerator wird mit einer höherfrequenten Schwingung beaufschlagt als der erste Schwingungsgenerator. In bevorzugten Ausgestaltungen des Verfahrens kann der zweite Schwingungsgenerator auch abschnittsweise oder bei Bedarf zugeschaltet werden.

In allen Ausgestaltungen des Verfahrens ist es bevorzugt, dass die Amplitude und/oder die Frequenz des ersten Schwingungsgenerators und/oder des zweiten Schwingungsgenerators gesteuert wird. Beispielsweise kann die Amplitude und/oder die Frequenz des ersten Schwingungsgenerators in Abhängigkeit von der optischen Dichte des erfassten Signals gesteuert werden. Der Vortrieb der zu analysierenden Partikel kann insbesondere automatisch vergrößert werden, wenn die optische Dichte zu gering ist und er kann - vorzugsweise automatisch - verringert werden, wenn die Anzahl der zu detektierenden Partikel zu einem Zeitpunkt zu groß wird.

Weitere Vorteile und Merkmale der vorliegenden Erfindung ergeben sich aus dem Ausführungsbeispiel, welches nachfolgend mit Bezug auf die beiliegenden Figuren erläutert wird.

In den Figuren zeigen:
- Fig. 1: eine schematische Seitenansicht eines erfindungsgemäßen Partikelmessgeräts;
- Fig. 2: das Signal eines Sensors bei agglomerierten Partikeln;
- Fig. 3: das Sensorsignal bei ausreichender Vereinzelung; und
- Fig. 4: die Kurvenverläufe der Sensorsignale bei aktiviertem Ultraschallgenerator und deaktiviertem Ultraschallgenerator.

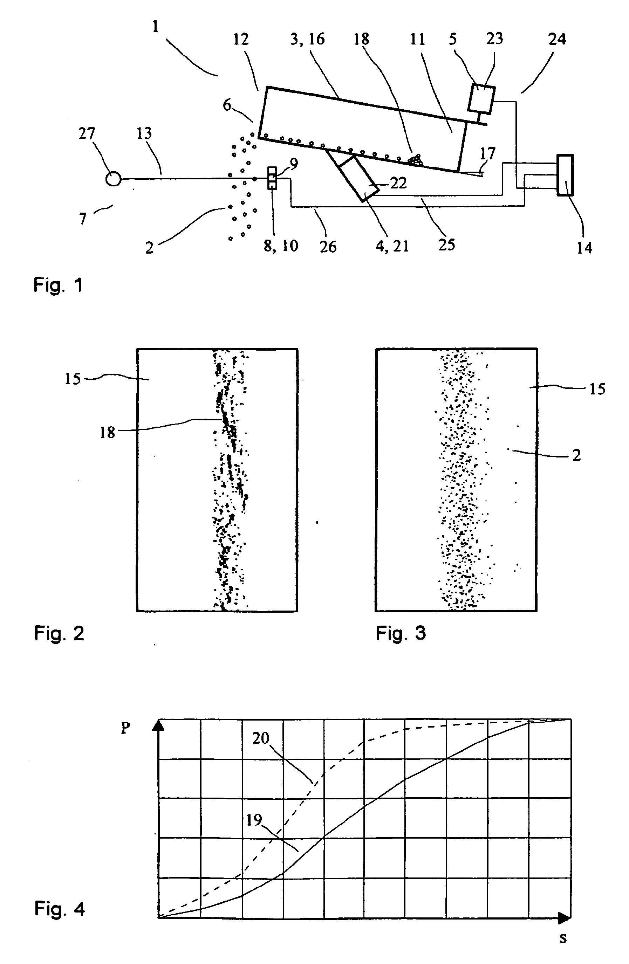

Mit Bezug auf die Figuren 1 bis 4 wird im Folgenden ein Ausführungsbeispiel des erfindungsgemäßen Partikelmessgeräts 1 beschrieben.

Das in Fig. 1 in einer schematischen Seitenansicht stark vereinfacht dargestellte optische Partikelmessgerät 1 dient zur Analyse von Partikeln 2 insbesondere von feinen und feinsten Schüttgütern. Einzelne Partikel 2 des Schüttguts sind schematisch in der Fig. 1 abgebildet.

Die als Dosierrinne 16 ausgeführte Dosiereinrichtung 3 des Partikelmessgeräts 1 weist hier ein geschlossenes Ende 11 und ein offenes Ende 12 auf, an dem der Ausgang 6 der Dosierrinne 16 vorgesehen ist.

Die Dosierrinne 16 ist hier insgesamt unter einem Winkel 17 zur Horizontalen angeordnet, wobei die Dosiereinrichtung im dargestellten Ausführungsbeispiel zum Ausgang 6 hin ansteigt, sodass die Partikel bei dem Transport aus der Dosierrinne 16 zum Ausgang 6 hin eine gewisse Höhendifferenz überwinden müssen. In anderen bevorzugten Ausgestaltungen ist die Dosierrinne 16 horizontal angeordnet.

Im Ausführungsbeispiel ist ein erster Schwingungsgenerator 4 als Antriebseinrichtung 21 vorgesehen. Der Schwingungsgenerator 4 ist hier als Magnetantrieb 22 ausgelegt, der mit einer zentralen Schwingungsfrequenz schwingt, die sich aus der Schwingungsfrequenz des öffentlichen Wechselstromnetzes ableitet.

Bei dem Schwingungsgenerator 4 ist insbesondere die Amplitude der Schwingung einstellbar, um den Vortrieb der Partikel 2 gegebenenfalls zu beschleunigen oder zu verlangsamen, wenn die optische Dichte des detektierten Signals 15 (vergleiche die Fig. 2 und 3) zu groß bzw. zu klein wird. Wird die optische Dichte zu groß, besteht die Gefahr, dass aufgrund von Schattenbildung und dergleichen mehrere Partikel als ein einziges Partikel detektiert werden, wodurch dessen Kornparameter und insbesondere Korngröße und Kornform fehlerhaft bestimmt würden.

Erfolgt bei einer hohen Anzahl an Partikeln eine fehlerhafte Korngrößen- und/oder Kornformbestimmung, ist die vollständige Messung insgesamt fehlerhaft und gegebenenfalls unbrauchbar, da bei der Produktion vieler Schüttgüter es auf die genaue Einhaltung vorgegebener Korngrößen und/oder Kornformen ankommt .

Wird nur ein konventioneller Magnetantrieb 22 an der Dosierrinne 16 eingesetzt, der mit einer niederfrequenten Schwingung von beispielsweise 50 oder 100 Hz schwingt, kann es passieren, dass Anbackungen an der Dosierrinne 16 oder Partikelagglomerationen 18 sich nicht auflösen, sondern entweder in der Dosierrinne 16 anhaften bleiben, oder aber als vollständiges Agglomerat 18 den Ausgang 6 der Dosierrinne 16 verlassen.

Verlässt ein Agglomerat 18 die Dosierrinne und passiert den Strahlengang 13 der optischen Analyseeinrichtung 7, wird ein nicht korrektes Messergebnis erzielt, da das Agglomerat insgesamt bezüglich seiner Korngröße und/oder Kornform bestimmt wird und nicht bezüglich seiner einzelnen Partikel 2. Bleibt ein solches Agglomerat in der Dosierrinne anhaften, muss die Dosierrinne nach erfolgtem Messvorgang aufwändig gereinigt werden, was die Wirtschaftlichkeit erheblich senkt.

Abgesehen davon wird bei der vorhergehenden Messung nicht die gesamte Probe vermessen, sodass ein repräsentatives Ergebnis über die gesamte Probe nicht oder nur unvollständig vorliegt.

Zur Durchführung der Messung ist eine Lichtquelle 27 vorgesehen, die beispielsweise als LED-Zeile vorgesehen sein kann und einen entsprechenden Lichtvorhang auf die zeilenförmige CCD-Kamera 10 bzw. Kamerazeile 9 ausrichtet. Die Kamerazeile 9 ist über eine elektrische Verbindungsleitung 26 mit der Datenverarbeitungseinrichtung 14 verbunden.

Ebenso sind über elektrische Verbindungsleitungen 25 und 24 die Schwingungsgeneratoren 4 und 5 mit der Datenverarbeitungseinrichtung 14 verbunden.

Auch die Lichtquelle 27 ist über entsprechende nicht dargestellte Leitungen mit der Datenverarbeitungseinrichtung 14 und einer Energiequelle verbunden.

Die Datenverarbeitungseinrichtung 14 steuert den Messvorgang und steuert insbesondere auch die Amplitude und gegebenenfalls die Frequenz des Schwingungsgenerators 4, der als Antriebseinrichtung 21 zum Transport der Partikel 2 dient.

Je nach Bedarf und insbesondere bei der Vermessung entsprechend feiner Schüttgüter wird der zweite Schwingungsgenerator 5 zugeschaltet, der hier als Ultraschallgenerator ausgeführt ist und Schwingungen im zweistelligen Kilohertzbereich erzeugt. Durch die hochfrequente Schwingung des Schwingungsgenerators 5, der beispielsweise über eine einfache Schraubverbindung mit der Dosierrinne 16 der Dosiereinrichtung 3 verbunden sein kann, wird die gesamte Dosiereinrichtung in hochfrequente Schwingung versetzt, wodurch sich die Partikelagglomerate und selbst festsitzende Anbackungen 18 an der Dosierrinne 16 auflösen und die Partikel 2 in einem erheblich verbesserten Umfang vereinzelt werden.

Die Fig. 2 und 3 zeigen den Unterschied bei der Vermessung feinpulvriger Schüttgüter wie beispielsweise Kaffee oder Zucker bei zugeschaltetem und abgeschaltetem zusätzlichen Schwingungsgenerator 5. Wird die in Fig. 3 dargestellte Messung mit der gleichen Probe mit zugeschaltetem Ultraschallgenerator wiederholt, so erhält man das gleiche Messergebnis.

Während in Fig. 2 das hier aufgetragene zweidimensionale Signal einzelne Agglomerate 18 detektiert, sind solche Agglomerate 18 in den in Fig. 3 aufgetragenen Signalen nicht erkennbar. Bei diesen beiden Messungen ist insbesondere darauf hinzuweisen, dass dieselbe Probe vermessen wurde, wobei erst durch die in Fig. 3 abgebildete Messung erkennbar wurde, dass bei der vorhergehenden Messung Agglomerate 18 vorlagen. Wird nur mit der konventionellen Methode gemessen, so können solche Agglomerate nicht zuverlässig erkannt werden, sondern es wird eine fehlerhafte Verteilung der Kornparameter ermittelt.

Diesen Zusammenhang zeigt Fig. 4 nochmals deutlicher. In Fig. 4 sind die zugehörigen Messkurven 19 und 20 der Messungen aus Fig. 2 und Fig. 3 aufgetragen.

In Fig. 4 ist der kumulierte Anteil P (auch Q3 genannt) der Partikel über der Korngröße S dargestellt. Der Kurvenverlauf 20 gemäß der Messung nach Fig. 3 mit zugeschaltetem Ultraschallschwingungsgenerator zeigt einen deutlich steileren Anstieg der kumulierten Partikelmenge über der Partikelgröße, während die Kurve 19 der Messung gemäß Fig. 2 mit abgeschaltetem Ultraschallschwingungsgenerator einen deutlich langsameren Anstieg der kumulierten Partikelmenge über der Partikelgröße aufweist.

Das bedeutet, dass bei abgeschaltetem Ultraschallschwingungsgenerator 5 deutlich größere Partikel bestimmt werden, während bei korrekter Messung sich ein Kurvenverlauf 20 einstellt, der eine sichtbare und erhebliche Verschiebung der Korngrößenverteilung in den kleineren Bereich aufweist.

Die Reproduzierbarkeit steigt erheblich. Eine erneute Vermessung der der Kurve 20 zugrunde liegenden Probe mit zugeschaltetem Ultraschallgenerator führt - im Rahmen der Messgenauigkeit - zum gleichen Ergebnis. Das bedeutet, dass das Messverfahren wiederholbar zum gleichen und hochqualitativen Ergebnis führt.

Ein weiterer wichtiger Vorteil ist, dass die gesamte Probe vermessen wird. Anhaftende Partikel werden durch den Ultraschallgenerator zuverlässig von der Dosierrinne 16 gelöst.

Insgesamt stellt die Erfindung ein Partikelmessgerät zur Verfügung, mit welchem eine deutlich verbesserte Auflösung und ein deutlich verbessertes Messergebnis bei der Bestimmung der Kornparameter (z. B. Korngrößenverteilung und Kornformverteilung) von feinen und feinsten Schüttgütern möglich sind. Außerdem wird ein zusätzlicher Reinigungsaufwand in vielen Fällen vermieden, da auch an der Dosierrinne 16 anhaftende Partikel 2 zuverlässig davon abgelöst werden.

### Bezugszeichenliste:

- 1: Partikelmessgerät
- 2: Partikel
- 3: Dosiereinrichtung
- 4: Schwingungsgenerator
- 5: Schwingungsgenerator
- 6: Ausgang
- 7: Analyseeinrichtung
- 8: Sensoreinrichtung
- 9: Kamerazeile
- 10: CCD-Kamera
- 11: geschlossen Ende
- 12: offenes Ende
- 13: Strahlengang
- 14: Datenverarbeitungseinrichtung
- 15: Signal
- 16: Dosierrinne
- 17: Neigungswinkel
- 18: Agglomerat
- 19: Kurve
- 20: Kurve
- 21: Antriebseinrichtung
- 22: Magnetantrieb
- 23: Vereinzelungseinrichtung
- 24: Verbindungsleitung
- 25: Verbindungsleitung
- 26: Verbindungsleitung
- 27: Lichtquelle P Anteil
- s: Größe

## Patentansprüche

1. Partikelmessgerät (1) zur Analyse von Partikeln (2) mit wenigstens einer Dosiereinrichtung (3), wobei die Dosiereinrichtung (3) wenigstens teilweise mittels eines ersten Schwingungsgenerators (4) in Schwingung versetzt wird, um in der Dosiereinrichtung (3) vorhandene Partikel (2) zu wenigstens einem Ausgang (6) der Dosiereinrichtung (3) zu transportieren und dabei zu vereinzeln,
**dadurch gekennzeichnet,**
**dass** neben dem ersten Schwingungsgenerator (4) ein zweiter unterschiedlicher Schwingungsgenerator (5) zur Vereinzelung der in der Dosiereinrichtung (3) vorhandenen Partikel (2) vorgesehen ist, wobei der zweite Schwingungsgenerator (5) dazu vorgesehen ist, höherfrequentere Schwingungen als der erste Schwingungsgenerator (4) zu erzeugen.

2. Partikelmessgerät (1) nach Anspruch 1, wobei wenigstens eine Analyseeinrichtung (7) vorgesehen ist, welche wenigstens eine optische Sensoreinrichtung (8) und vorzugsweise wenigstens eine Kamerazeile (9) aufweist.

3. Partikelmessgerät (1) nach einem der vorhergehenden Ansprüche, wobei der erste Schwingungsgenerator (4) dazu geeignet und bestimmt ist, Schwingungen im Bereich zwischen 10 Hz und 1000 Hz, insbesondere zwischen 10 Hz und 500 Hz zu erzeugen und/oder wobei die Schwingungsfrequenz des ersten Schwingungsgenerators (4) aus der Frequenz des Wechselstromnetzes abgeleitet wird.

4. Partikelmessgerät (1) nach einem der vorhergehenden Ansprüche, wobei der zweite Schwingungsgenerator (5) wenigstens die doppelte und insbesondere wenigstens die zehnfache zentrale Schwingungsfrequenz aufweist, als der erste Schwingungsgenerator.

5. Partikelmessgerät (1) nach einem dar vorhergehenden Ansprüche, wobei der zweite Schwingungsgenerator als Ultraschallgenerator ausgeführt ist.

6. Partikelmessgerät (1) nach einem der vorhergehenden Ansprüche, wobei wenigstens der zweite Schwingungsgenerator (5) dazu geeignet und bestimmt ist, eine variable Schwingungsfrequenz zu erzeugen, welche periodisch innerhalb vorgegebener und vorzugsweise einstellbarer Frequenzen einstellbar ist.

7. Partikelmessgerät (1) nach einem der vorhergehenden Ansprüche, wobei die Dosiereinrichtung (3) eine an einem Ende (11) geschlossene U-förmige Dosierrinne aufweist, wobei an dem offenen Ende (12) der Dosierrinne der Ausgang vorgesehen ist.

8. Partikelmessgerät (1) nach einem der vorhergehenden Ansprüche, wobei wenigstens eine Lichtquelle (27) vorgesehen ist, welche Licht auf wenigstens eine CCD-Kamera (10) als Sensoreinrichtung (8) strahlt, wobei der Strahlengang (13) so angeordnet ist, dass von dem Ausgang (6) der Dosiereinrichtung (3) herabfallende Partikel (2) den Strahlengang (13) durchqueren.

9. Partikelmessgerät (1) nach einem der vorhergehenden Ansprüche, wobei eine Datenverarbeitungseinrichtung (14) vorgesehen ist, mit welcher die von der Sensoreinrichtung (8) erfassten Signale (15) erfassbar und auswertbar sind.

10. Partikelmessgerät (1) nach einem der vorhergehenden Ansprüche, wobei eine zentrale Schwingungsfrequenz des zweiten Schwingungsgenerators größer 1 kHz und vorzugsweise größer 5 kHz beträgt.

11. Verfahren zur Analyse von Partikeln (2) unter Verwendung wenigstens einer Dosiereinrichtung (3) zur Aufnahme einer zu analysierenden Probe, wobei die Partikel (2) in der Dosiereinrichtung (3) mittels eines ersten Schwingunggenerators (4) vereinzelt und zu wenigstens einem Ausgang (6) der Dosiereinrichtung (3) transportiert werden,
**dadurch gekennzeichnet,**
**dass** die Dosiereinrichtung (3) zur Vereinzelung und zum Transport der Partikel mittels des ersten Schwingungsgenerators und eines zweiten davon unterschiedlichen Schwingungsgenerators in Schwingung versetzt wird, wobei mit dem zweiten Schwingungsgenerator eine höherfrequente Schwingung als mit dem ersten Schwingungsgenerator erzeugt wird.

12. Verfahren nach dem vorhergehenden Anspruch, wobei die Amplitude und/oder die Frequenz wenigstens des ersten und/oder des zweiten Schwingungsgenerators gesteuert wird.

13. Verfahren nach einem der beiden vorhergehenden Ansprüche, wobei der zweite Schwingungsgenerator abschnittsweise zugeschaltet wird.

## Claims

1. A particle measuring device (1) for the analysis of particles (2) with at least one metering unit (3), with the metering unit (3) oscillating at least partly by means of a first oscillator (4) to transport particles (2) existing in the metering unit (3) to at least one outlet (6) of the metering unit (3) and thus separate them,
**characterised in that**
besides the first oscillator (4) a second, different oscillator (5) is provided for separating the particles (2) existing in the metering unit (3), with the second oscillator (5) being provided for generating higher frequency oscillations than the first oscillator (4).

2. The particle measuring device (1) according to claim 1, wherein at least one analysis equipment (7) is provided, which has at least one optical sensor means (8) and preferably at least one camera line (9).

3. The particle measuring device (1) according to anyone of the preceding claims, wherein the first oscillator (4) is suitable and adapted to generate oscillations in the range between 10 Hz and 1000 Hz, in particular between 10 Hz and 500 Hz and/or with the oscillation frequency of the first oscillator (4) being derived from the frequency of the alternating current network.

4. The particle measuring device (1) according to anyone of the preceding claims, wherein the second oscillator (5) has at least the double and in particular at least the tenfold central oscillation frequency than the first oscillator (4).

5. The particle measuring device (1) according to anyone of the preceding claims, wherein the second oscillator (5) is realised as an ultrasonic generator.

6. The particle measuring device (1) according to anyone of the preceding claims, wherein at least the second oscillator (5) is suitable and adapted to generate a variable oscillation frequency which can be periodically adjusted within given and preferably adjustable frequencies.

7. The particle measuring device (1) according to anyone of the preceding claims, wherein the metering unit (3) presents an U-shaped metering channel closed at one end (11), with the outlet being provided at the open end (12) of the metering channel.

8. The particle measuring device (1) according to anyone of the preceding claims, wherein at least one light source (27) is provided, which radiates light on at least one CCD camera (10) as a sensor means (8), with the beam path (13) being arranged such that particles falling down from the outlet (6) of the metering unit (3) pass through the beam path (13).

9. The particle measuring device (1) according to anyone of the preceding claims, wherein a data processing unit (14) is provided, by means of which the signals (15) recorded by the sensor means (8) can be recorded and analysed.

10. The particle measuring device (1) according to anyone of the preceding claims, wherein a central oscillation frequency of the second oscillator is greater 1 kHz and preferably greater 5 kHz.

11. A method for analysis of particles (2) by using at least one metering unit (3) for taking up a sample to be analysed, wherein the particles (2) in the metering unit (3) are separated by means of a first oscillator (4) and are transported to at least one outlet (6) of the metering unit (3),
**characterised in that**
the metering unit (3) for separation and for transport of the particles is oscillated by means of the first oscillator and a second oscillator different from the first oscillator, with a higher frequency oscillation being generated with the second oscillator than with the first oscillator.

12. The method according to the preceding claim, wherein the amplitude and/or frequency at least of the first and/or the second oscillator is controlled.

13. The method according to anyone of the two preceding claims, wherein the second oscillator is connected in sections.

## Revendications

1. Appareil de mesure de particules (1) pour l'analyse de particules (2), comprenant au moins un dispositif de dosage (3), ledit dispositif de dosage (3) étant mis en oscillations au moins en partie par l'intermédiaire d'un premier générateur d'oscillations (4) afin de transporter des particules (2) présentes à l'intérieur du dispositif de dosage (3) vers au moins une sortie (6) du dispositif de dosage (3) tout en les isolant,
**caractérisé par le fait que** l'on prévoit, outre ledit premier générateur d'oscillations (4), un deuxième générateur d'oscillations différent (5) pour l'isolation des particules (2) présentes à l'intérieur du dispositif de dosage (3), ledit deuxième générateur d'oscillations (5) étant prévu pour générer des oscillations de plus haute fréquence que celles dudit premier générateur d'oscillations (4).

2. Appareil de mesure de particules (1) selon la revendication 1, dans lequel au moins un dispositif d'analyse (7) est prévu qui comprend au moins un dispositif de capteur optique (8) et de préférence au moins une ligne de caméra (9).

3. Appareil de mesure de particules (1) selon l'une quelconque des revendications précédentes, dans lequel ledit premier générateur d'oscillations (4) est apte et destiné à générer des oscillations dans la gamme comprise entre 10 Hz et 1000 Hz, en particulier entre 10 Hz et 500 Hz et/ou dans lequel la fréquence d'oscillations dudit premier générateur d'oscillations (4) est dérivée de la fréquence du réseau électrique à courant alternatif.

4. Appareil de mesure de particules (1) selon l'une quelconque des revendications précédentes, dans lequel ledit deuxième générateur d'oscillations (5) présente au moins deux fois et en particulier au mois dix fois la fréquence centrale d'oscillations que présente ledit premier générateur d'oscillations.

5. Appareil de mesure de particules (1) selon l'une quelconque des revendications précédentes, dans lequel ledit deuxième générateur d'oscillations est réalisé en tant que générateur d'ultrasons.

6. Appareil de mesure de particules (1) selon l'une quelconque des revendications précédentes, dans lequel au moins ledit deuxième générateur d'oscillations (5) est apte et destiné à générer une fréquence variable d'oscillations qui peut être réglée périodiquement à l'intérieur de fréquences données et de préférence réglables.

7. Appareil de mesure de particules (1) selon l'une quelconque des revendications précédentes, dans lequel ledit dispositif de dosage (3) présente une goulotte de dosage en U qui est fermée à une extrémité (11), à l'extrémité ouverte (12) de ladite goulotte de dosage étant prévue la sortie.

8. Appareil de mesure de particules (1) selon l'une quelconque des revendications précédentes, dans lequel au moins une source de lumière (27) est prévue qui fait rayonner de la lumière sur au moins une caméra CCD (10) en tant que dispositif de capteur (8), le trajet des rayons (13) étant agencé de manière à ce que des particules (2) qui tombent depuis ladite sortie (6) du dispositif de dosage (3) traversent le trajet des rayons (13).

9. Appareil de mesure de particules (1) selon l'une quelconque des revendications précédentes, dans lequel un dispositif de traitement de données (14) est prévu qui permet de saisir et d'évaluer les signaux (15) saisis par ledit dispositif de capteur (8).

10. Appareil de mesure de particules (1) selon l'une quelconque des revendications précédentes, dans lequel une fréquence centrale d'oscillations dudit deuxième générateur d'oscillations est supérieure à 1 kHz et de préférence supérieure à 5 kHz.

11. Procédé d'analyse de particules (2) en utilisant au moins un dispositif de dosage (3) pour recevoir un échantillon à analyser, les particules (2) présentes à l'intérieur du dispositif de dosage (3) étant isolées et transportées vers au moins une sortie (6) du dispositif de dosage (3) par le biais d'un premier générateur d'oscillations (4),
**caractérisé par le fait que**, pour l'isolation et le transport des particules, ledit dispositif de dosage (3) est mis en oscillations au moyen du premier générateur d'oscillations et d'un deuxième générateur d'oscillations différent de celui-ci, les oscillations générées par ledit deuxième générateur d'oscillations étant de plus haute fréquence que celles générées par ledit premier générateur d'oscillations.

12. Procédé selon la revendication précédente, dans lequel l'amplitude et/ou la fréquence au moins du premier et/ou du deuxième générateur(s) d'oscillations est commandée.

13. Procédé selon l'une quelconque des deux revendications précédentes, dans lequel ledit deuxième générateur d'oscillations est mis en circuit par sections.
